# EUROPÄISCHE PATENTSCHRIFT

(11) **EP 3 134 842 B1**
(45) Veröffentlichungstag und Bekanntmachung des Hinweises auf die Patenterteilung: **28.08.2019**
(21) Anmeldenummer: 15739205.1
(22) Anmeldetag: 06.07.2015
(51) Int. Cl.: G06F 21/55, H04L 29/06

(54) **RECHENVORRICHTUNG UND VERFAHREN ZUM ERKENNEN VON ANGRIFFEN AUF EIN TECHNISCHES SYSTEM ANHAND VON EREIGNISSEN EINER EREIGNISFOLGE**
COMPUTING DEVICE AND METHOD FOR DETECTING ATTACKS ON A TECHNICAL SYSTEM BASED ON EVENTS OF AN EVENT SEQUENCE
DISPOSITIF INFORMATIQUE ET PROCÉDÉ DE DÉTECTION DES ATTAQUES SUR UN SYSTÈME TECHNIQUE À L'AIDE DES ÉVÉNEMENTS D'UNE SÉQUENCE D'ÉVÉNEMENTS

(30) Priorität: 15.07.2014 DE 102014213752
(43) Veröffentlichungstag der Anmeldung: 01.03.2017
(73) Patentinhaber: Siemens Aktiengesellschaft, 80333 München (DE)
(72) Erfinder: BUSSER, Jens-Uwe, 85579 Neubiberg (DE); CUELLAR, Jorge, 82065 Baierbrunn (DE); MUNZERT, Michael, 82166 Gräfelfing (DE); PATZLAFF, Heiko, 80799 München (DE); STIJOHANN, Jan, 81825 München (DE)
(86) Internationale Anmeldenummer: PCT/EP2015/065371
(87) Internationale Veröffentlichungsnummer: WO 2016/008757

(56) Entgegenhaltungen:
- EP-A2- 1 418 484
- EP-A2- 1 628 222
- US-A1- 2002 078 381

## Beschreibung

Die vorliegende Erfindung betrifft eine Rechenvorrichtung sowie ein Verfahren zum Erkennen von Angriffen auf ein technisches System anhand von Ereignissen einer Ereignisfolge. Des Weiteren betrifft die vorliegende Erfindung ein Computerprogrammprodukt zum Durchführen eines solchen Verfahrens. Das Dokument US 2002/078381 offenbart ein Verfahren zum Erkennen von Angriffen auf ein Computersystem, bei dem Folgen von Ereignissen anhand bestimmter Regeln ausgewertet werden.

In verschiedenen technischen Systemen können Angriffe von Dritten auf das technische System erfolgen. Solche Angriffe sollen möglichst schnell und sicher erkannt werden. Hierzu können beispielsweise Angriffserkennungssysteme (Intrusion Detection System, IDS) verwendet werden, die mit Hilfe von Sensoren Ereignisse (bzw. Events) wahrnehmen, die dann in Log-Dateien gesammelt werden. Das Wort "Sensor" bezeichnet eine beliebige Apparatur, Einrichtung oder einen Mechanismus zur Wahrnehmung oder Identifizierung von einzelnen "Events" oder "Ereignissen", die für die Analyse eines Angriffs oder Angriffsversuchs von Interesse sein können. Ein Sensor kann ein physikalisches Gerät zum Messen von physikalischen Größen sein. Ein Sensor kann beispielsweise auch ein Programm Code sein, das Aktivitäten von einem IT-Gerät mit einem Kommunikationsnetz, Ein-/Ausgabe-Gerät, Speicher oder mit Prozessoren feststellt. Gleichzeitig können diese Ereignisse durch eine Mustererkennung überprüft und verarbeitet, und die gesammelten Daten mit Signaturen aus einer Musterdatenbank verglichen werden.

Falls die gesammelten Daten auf eines der Muster zutreffen, so wird ein Alarm ausgelöst. Solche Log-Dateien weisen Logs auf, die auch als Protokolldateien bezeichnet werden. Solche Logs sind eine selbsttätige Aufzeichnung bzw. Protokollierung von Events oder Ereignissen in einer Datei oder mittels eines anderen technischen Speichermechanismus. Logs werden verwendet, um Situationen zu rekonstruieren oder zu interpretieren, aber auch um kritische Situationen schnell und zuverlässig erkennen zu können. Logs werden beispielsweise in Tests bei der Angriffs- bzw. Eindringerkennung verwendet. Bei Tests zeichnet ein Testprotokoll die Ereignisse während einer Testausführung auf. Logs können auch in der nachträglichen Interpretation von Ereignisfolgen verwendet werden, zum Beispiel um Angriffe oder Angriffsversuche zu verstehen (sogenannte Forensik), aber auch um Fehler jeder Art zu erkennen (sogenanntes Debugging). Insbesondere bei Angriffserkennungssystemen ist das schnelle Erkennen von kritischen Situationen wichtig.

Gespeicherte Ereignisse in den Log-Dateien werden häufig durch Automaten analysiert. Es gibt verschiedene Arten von solchen Automaten, die dazu verwendet werden können. Hierzu zählen deterministische Automaten, nicht-deterministische und lernende Automaten. Für xml-Daten können auch Baumautomaten benutzt werden. Alle diese Automaten analysieren die gespeicherten Logs in der temporalen Reihenfolge. Die Arbeitslast einer solchen Verarbeitung ist allerdings in manchen Situationen sehr groß, wodurch Systeme mit einer hohen Rechenleistung erforderlich werden.

Vor diesem Hintergrund besteht eine Aufgabe der vorliegenden Erfindung darin, Angriffe auf ein technisches System auf einfache Weise zu erkennen, wobei die erforderliche Rechenleistung reduziert wird.

Es wird eine Rechenvorrichtung zum Erkennen von Angriffen auf ein technisches System anhand von Ereignissen einer Ereignisfolge vorgeschlagen. Die Rechenvorrichtung weist eine Empfangseinheit zum Empfangen der Ereignisfolge, die eine Mehrzahl von Ereignissen aufweist, wobei ein Angriff durch eine bestimmte Sequenz an Ereignissen in der empfangenen Ereignisfolge bestimmt ist, und eine Überprüfungseinheit zum Überprüfen der empfangenen Ereignisfolge basierend auf einem Hauptereignis auf, das in der bestimmten Sequenz an Ereignissen enthalten ist, wobei die Überprüfungseinheit dazu eingerichtet ist, eine Mustererkennung in der empfangenen Ereignisfolge basierend auf der bestimmten Sequenz an Ereignissen durchzuführen, wenn das Hauptereignis aufgetreten ist.

Die jeweilige Einheit, zum Beispiel Empfangseinheit oder Überprüfungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die Rechenvorrichtung kann beispielsweise als Prozessor, Mikroprozessor, Computer, PC, Server oder ähnliches ausgestaltet sein. Sie kann in einem Netzwerk angeordnet sein und mit anderen Geräten oder Rechenvorrichtungen kommunizieren, beispielsweise mit einem technischen System.

Angriffe bzw. Attacken auf oder andere kritische Situationen in einem technischen System können anhand von Sequenzen von Ereignissen (sogenannte Traces Tr) erkannt werden, die einem Muster M entsprechen. Auch einzelne Ereignisse dieser Sequenzen können bereits Indikatoren sein, dass eine Attacke geschieht. Für sich genommen ist jedes Ereignis nur ein schwacher Indikator, erst die zeitliche Kombination von solchen Ereignissen ist ein starker Indikator für eine Attacke. Allerdings sind nicht alle Ereignisse in einer Sequenz bzw. in einem Muster gleich starke Indikatoren.

Eine Ereignisfolge, auch Log genannt, kann als ein n-Tupel verstanden werden, dass aus mehreren Ereignissen besteht: <(EV_1, param_1, t_1), (EV_2, param_2, t_2), ... (EV_i, param_i, t_i), ... (EV_n, param_n, t_n)>. EV steht hierbei für ein Ereignis, param für den zugehörigen Parameter und t für den zugehörigen Zeitstempel oder Zeitpunkt des Auftretens.

Beispiele möglicher Parameter sind ein Account-Name, ein Passwort und/oder eine Rolle bei einem Authentifikations-, Autorisations- oder Login-Event, ein Programmname, d.h. der Name einer exe- oder dll-Datei, eine Speicherstelle bei einem Programmabsturz oder illegalen Speicherzugriff oder einem ähnlichen Ereignis, ein Programmname bei einem Öffnen eines IP-Sockets, eine Portnummer und ein Name eines auf diesem Port lauschenden Programms bei einer empfangenen Nachricht, IP-Adressen, URLs, URIs, und ähnliches.

Ein Muster M enthält dabei eine Unterfolge bzw. Untermenge dieses n-Tupels. Das Muster M ist ein Indikator, dass ein Angriff erfolgt ist. Hierbei ist die Wahrscheinlichkeit eines Angriffs bei auftretendem Muster M in der Ereignisfolge P(Att|M) größer als die Wahrscheinlichkeit eines Angriffs ohne auftretendes Muster (P(Att)).

Nicht alle Ereignisse des Musters M sind ein gleich starker Indikator eines Angriffs. Beispielsweise kann ein Ereignis EV1 ein stärkerer Indikator als das Ereignis EV2 sein. Hier würde also gelten: P(ATT|EVI) > P(ATT|EV2) > P(ATT). Wenn die bestimmte Sequenz an Ereignissen bzw. das Muster M in der empfangenen Ereignisfolge, also dem n-Tupel, gesucht wird, geht viel Zeit dabei verloren, Sequenzen von sehr schwachen Indikatoren zu suchen. Des Weiteren werden hohe Rechnerressourcen benötigt.

Daher wird gemäß der vorgeschlagenen Rechenvorrichtung ein Hauptereignis HEV ausgewählt, bei dem die Wahrscheinlichkeit, dass eine Attacke bzw. ein Angriff vorliegt, groß ist. Statt nun die gesamte Sequenz von Ereignissen in der empfangenen Ereignisfolge zu suchen, wird lediglich die empfangene Ereignisfolge auf dieses Hauptereignis hin untersucht, und, wenn das Hauptereignis aufgetreten ist, eine Mustererkennung in der empfangenen Ereignisfolge basierend auf der bestimmten Sequenz an Ereignissen durchgeführt.

Bei der empfangenen Ereignisfolge <(EV_1, param_1, t_1), (EV_2, param_2, t_2), ... (HEV_i, param_i, t_i), ... (EV_n, param_n, t_n) > könnte beispielsweise das i-te Ereignis als Hauptereignis HEV erkannt werden. Erst dann wird eine genaue Mustererkennung durchgeführt.

Auf diese Weise wird eine genaue Überprüfung der empfangenen Ereignisfolge erst dann durchgeführt, wenn bereits eine hohe Wahrscheinlichkeit für eine Attacke vorliegt. Somit kann die erforderliche Rechenleistung reduziert werden, da nur in dem Fall eines aufgetretenen Hauptereignisses, eine höhere Rechenleistung erforderlich wird.

Gemäß einer Ausführungsform ist das Hauptereignis ein bestimmtes Ereignis aus der Sequenz von Ereignissen, bei dem die Wahrscheinlichkeit eines Angriffs maximal ist.

Das Hauptereignis HEV ist dadurch definiert, dass bei Auftreten dieses Ereignisses die Wahrscheinlichkeit eines Angriffs nahezu maximiert ist. Das bedeutet, dass die bedingte Wahrscheinlichkeit P(ATT|HEV) größer als P(ATT|EV) ist, wobei EV für alle Ereignisse in der bestimmten Sequenz an Ereignissen steht. Das Hauptereignis steht hierbei für ein Ereignis mit einer großen Indizkraft bzw. Wichtigkeit, dass daher als deutliches Anzeichen eine Attacke oder kritischen Situation gewertet werden kann.

Gemäß einer weiteren Ausführungsform weist die Rechenvorrichtung eine Speichereinheit zum Speichern der empfangenen Ereignisfolge in einer Logdatei auf.

Die Speichereinheit kann eine beliebige Art von Speicher sein, der in der Lage ist, die empfangene Ereignisfolge zu speichern. Dies kann beispielsweise in einer Log-Datei erfolgen, die dann durch die Überprüfungseinheit untersucht wird.

Gemäß einer weiteren Ausführungsform ist die Überprüfungseinheit dazu eingerichtet, eine Mustererkennung in der gespeicherten Ereignisfolge durchzuführen, wobei die Überprüfungseinheit die Mustererkennung zu einem Zeitpunkt vor Auftreten des Hauptereignisses beginnt und mindestens bis zu dem Auftreten des Hauptereignisses durchführt.

Gemäß dieser Ausführungsform wird, wenn das Hauptereignis auftritt, eine Mustererkennung in der bislang gespeicherten Ereignisfolge durchgeführt. Dabei beginnt die Überprüfungseinheit die Mustererkennung zu einem Zeitpunkt vor Auftreten des Hauptereignisses und führt die Mustererkennung von diesem vergangenen Zeitpunkt bis zu dem Auftreten des Hauptereignisses in der gespeicherten Ereignisfolge durch. Der Zeitpunkt vor Auftreten des Hauptereignisses kann nach Kriterien gewählt werden, die die Erfahrung oder Intuition der Experten wiedergeben.

Diese Kriterien können beispielsweise auf der Erfahrung beruhen, wie lange solche Sequenzen dauern können oder wie lange ein Angriff dauern kann, z.B. bis ein Time-Out ausläuft, oder ähnliches.

Gemäß einer weiteren Ausführungsform ist die Überprüfungseinheit dazu eingerichtet, die Mustererkennung zu einem Zeitpunkt vor Auftreten des Hauptereignisses zu beginnen und über den Zeitpunkt des Auftretens des Hauptereignisses hinaus fortzusetzen.

Gemäß dieser Ausführungsform wird die Mustererkennung zu einem Zeitpunkt vor Auftreten des Hauptereignisses begonnen und zunächst bis zu dem Zeitpunkt des Auftretens des Hauptereignisses durchgeführt und dann für die Zukunft über den Zeitpunkt des Auftretens des Hauptereignisses hinaus fortgesetzt. Auf diese Weise wird nicht nur die bereits empfangene Ereignisfolge, sondern auch die zukünftig zu empfangende Ereignisfolge mit einer Mustererkennung auf die gesamte Sequenz der Ereignisse, d.h. mit dem vollständigen Muster, überprüft.

Die Überprüfungseinheit kann die Mustererkennung über das Auftreten des Hauptereignisses in der gespeicherten Ereignisfolge hinaus durchführen, falls das nicht das letzte Ereignis in dem Muster ist. Dies kann mithilfe eines zweiten Zustandsautomaten geschehen, der die Ereignisse nach dem Zeitpunkt des Auftretens des Hauptereignisses abbildet.

Gemäß einer weiteren Ausführungsform ist die Überprüfungseinheit dazu eingerichtet, eine rückwärtslaufende Mustererkennung in der gespeicherten Ereignisfolge durchzuführen, wobei die Überprüfungseinheit die Mustererkennung zu dem Zeitpunkt des Auftretens des Hauptereignisses beginnt.

Die Überprüfungseinheit kann, statt die Mustererkennung von einem Zeitpunkt in der Vergangenheit bis zur Gegenwart oder in die Zukunft hinein durchzuführen, die Mustererkennung auch rückwärts durchführen. Das bedeutet, dass von dem Zeitpunkt des Auftretens des Hauptereignisses Schritt für Schritt die gespeicherte Ereignisfolge rückwärts mit einer Mustererkennung überprüft wird. Auf diese Weise ist es nicht erforderlich, sämtliche Ereignisse in der Vergangenheit zu überprüfen, sondern es kann nach und nach in die Vergangenheit weiter fortgeschritten werden, und, sobald ein Muster erkannt wurde, abgebrochen werden. Die Mustererkennung kann ebenfalls abgebrochen werden, wenn erkannt wird, dass das Hauptereignis als alleiniges Ereignis aufgetreten ist, ohne dass ein Muster um das Hauptereignis herum zu erkennen ist. Das bedeutet, dass das Hauptereignis als einzelnes Ereignis aufgetreten ist, die zeitlich benachbarten Ereignisse aber nicht mit dem Muster für einen Angriff übereinstimmen.

Gemäß einer weiteren Ausführungsform weist die Überprüfungseinheit einen Zustandsautomaten zur Überprüfung der Ereignisfolge auf.

Beispielsweise kann die Überprüfungseinheit einen Zustandsautomaten zur Überprüfung der Ereignisfolge verwenden. Der Zustandsautomat kann die Ereignisse in der empfangenen Ereignisfolge in der Reihenfolge des Auftretens bis zu dem Auftreten des Hauptereignisses und eventuell auch darüber hinaus untersuchen, das heißt einer Mustererkennung unterziehen.

Gemäß einer weiteren Ausführungsform weist die Überprüfungseinheit einen ersten Zustandsautomaten und einen zweiten Zustandsautomaten auf, wobei der erste Zustandsautomat die Ereignisse bis zu dem Zeitpunkt des Auftretens des Hauptereignisses abbildet und der zweite Zustandsautomat die Ereignisse nach dem Zeitpunkt des Auftretens des Hauptereignisses abbildet.

Gemäß dieser Ausführungsform sind zumindest zwei Zustandsautomaten vorgesehen. Hierbei beschreibt der erste Zustandsautomat die Ereignisse bis zu dem Zeitpunkt des Auftretens des Hauptereignisses und der zweite Zustandsautomat beschreibt die Ereignisse von dem Auftreten des Hauptereignisses in die Zukunft hinein, beispielsweise bis zu dem Zeitpunkt der Generierung eines Alarms. Je nachdem, welcher Zeitraum untersucht werden soll, wird einer der beiden Automaten dazu verwendet.

Gemäß einer weiteren Ausführungsform ist der erste Zustandsautomat dazu geeignet, die Ereignisfolge rückwärts zu überprüfen.

Der erste Zustandsautomat kann umgekehrt werden, wozu ein Verfahren in der Automatentheorie verwendet wird, dass als Umkehrung bzw. Spiegelung der regulären Sprache des Zustandsautomaten verstanden wird. Beispielsweise kann aus dem ersten Automaten dadurch ein deterministischer Automat gebildet werden.

Gemäß einer weiteren Ausführungsform ist die Überprüfungseinheit dazu eingerichtet, ein Alarmsignal basierend auf einem Ergebnis der Mustererkennung auszugeben.

Wenn die Mustererkennung ein positives Ergebnis ergibt, das heißt, dass ein Angriff stattgefunden hat, kann die Überprüfungseinheit ein Alarmsignal generieren. Dieses Alarmsignal kann an das technische System übergeben werden, welches daraufhin entsprechende Gegenmaßnahmen treffen kann.

Gemäß einer weiteren Ausführungsform weist die Ereignisfolge Ausgaben von Sensoren des technischen Systems auf.

Die Ereignisfolge kann beispielsweise Werte von Sensoren aufweisen, wobei diese Werte im Falle eines Angriffs auf das technische System verändert sein können. Ein bestimmtes Muster an veränderten Werten, das heißt ein bestimmtes Muster an Ereignissen, wird daher als Angriff auf das technische System erkannt.

Gemäß einer weiteren Ausführungsform ist die Rechenvorrichtung Teil eines Angriffserkennungssystems zum Erkennen von Angriffen auf das technische System.

Um Angriffe auf ein technisches System zu erkennen, welches irgendeine Art von System sein kann, auf das Angriffe von außen durchgeführt werden können, kann ein Angriffserkennungssystem verwendet werden. Dies kann innerhalb des technischen Systems angeordnet sein, oder auch als getrennte Vorrichtung vorgesehen sein. Die Rechenvorrichtung kann Teil eines solchen Angriffserkennungssystems sein.

Gemäß einem weiteren Aspekt wird ein Verfahren zum Erkennen von Angriffen auf ein technisches System anhand von Ereignissen einer Ereignisfolge vorgeschlagen. Das Verfahren weist die folgenden Schritte auf: Empfangen der Ereignisfolge, die eine Mehrzahl von Ereignissen aufweist, wobei ein Angriff durch eine bestimmte Sequenz an Ereignissen in der empfangenen Ereignisfolge bestimmt ist, und Überprüfen der empfangenen Ereignisfolge basierend auf einem Hauptereignis, das in der bestimmten Sequenz an Ereignissen enthalten ist, wobei eine Mustererkennung in der empfangenen Ereignisfolge basierend auf der bestimmten Sequenz an Ereignissen durchgeführt wird, wenn das Hauptereignis aufgetreten ist.

Die für die vorgeschlagene Vorrichtung beschriebenen Ausführungsformen und Merkmale gelten für das vorgeschlagene Verfahren entsprechend.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert. Es zeigen:
- Fig. 1: ein schematisches Blockdiagramm eines Ausführungsbeispiels einer Rechenvorrichtung zum Erkennen von Angriffen auf ein technisches System;
- Fig. 2: zwei Zustandsautomaten, die zur Mustererkennung verwendet werden; und
- Fig. 3: ein schematisches Ablaufdiagramm eines Ausführungsbeispiels eines Verfahrens zum Erkennen von Angriffen auf ein technisches System.

In den Figuren sind gleiche oder funktionsgleiche Elemente mit denselben Bezugszeichen versehen worden, sofern nichts anderes angegeben ist.

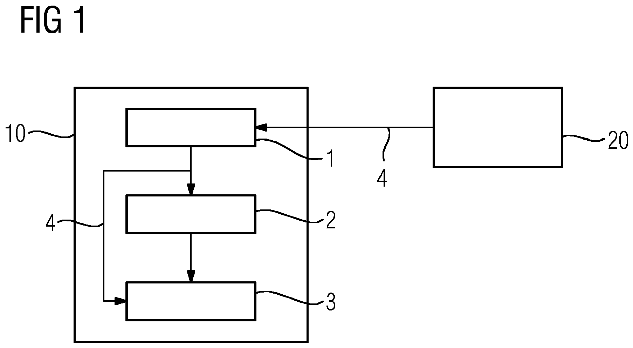

Fig. 1 zeigt eine Rechenvorrichtung 10 zum Erkennen von Angriffen auf ein technisches System 20 anhand von Ereignissen einer Ereignisfolge 4.

Sensoren (nicht gezeigt) können Ereignisse detektieren, die dann als Ereignisfolge 4 an die Rechenvorrichtung 10 übergeben werden. Diese Sensoren können Teil des technischen Systems 20 sein, oder Bestandteil eines Angriffserkennungssystems (nicht gezeigt). Sensoren können dabei Netzwerk-basierte Ereignisse, wie beispielsweise einen Zugriff auf einen bestimmten Server oder eine Internetseite, detektieren oder auch Host-basierte Ereignisse, wie beispielsweise Anmeldeversuche eines Nutzers, Zugriffe auf Speicherbereiche, detektieren.

Eine Empfangseinheit 1 empfängt die Ereignisfolge 4, die eine Mehrzahl von solchen Ereignissen aufweist. Ein Angriff auf das technische System kann anhand einer bestimmten Sequenz von Ereignissen in der empfangenen Ereignisfolge bestimmt werden. Diese Sequenz kann als Muster M bezeichnet werden.

Hierzu überprüft eine Überprüfungseinheit 2 zunächst die empfangene Ereignisfolge darauf, ob ein bestimmtes Hauptereignis auftritt. Wenn dieses Hauptereignis auftritt, kann die Überprüfungseinheit 20 eine Mustererkennung in der Ereignisfolge 4 durchführen. Hierzu kann die Überprüfungseinheit 2 beispielsweise in der bislang empfangenen Ereignisfolge 4, die in einer Speichereinheit 3 gespeichert sein kann, eine Mustererkennung durchführen. Zusätzlich kann die Überprüfungseinheit 2 auch für eine zukünftig empfangene Ereignisfolge 4 eine Mustererkennung durchführen.

Da die Überprüfungseinheit 2 zunächst nur eine grobe Analyse der empfangenen Ereignisfolge dahingehend durchführt, ob ein bestimmtes Hauptereignis auftritt, werden der Rechenaufwand und die benötigte Rechenleistung reduziert.

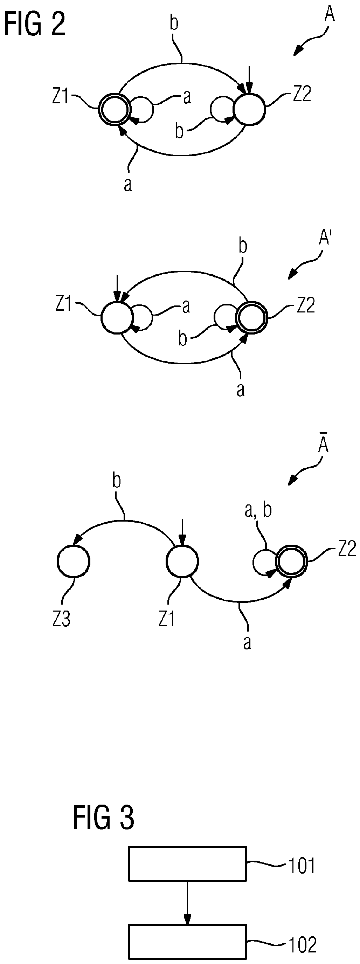

Die Überprüfungseinheit 2 kann beispielsweise durch Zustandsautomaten realisiert werden. Beispiele von Zustandsautomaten A, A' und Ä sind in Fig. 2 dargestellt.

Die Zustände Z1, Z2, Z3 der Automaten A, A' und Ä haben keine spezielle Bedeutung, aber sie kodieren auf geeignete Weise den relevanten Teil der Vergangenheitsinformation. So kann z.B. ein Zustand bedeuten, dass eine bestimmte Sequenz von Ereignissen a, b, auch Events genannt, geschehen ist, ohne dass in dieser Zeit ein anderes relevantes Ereignis geschah. Hierbei wird ein erster Zustandsautomat A verwendet, der die Ereignisse bis zum Auftreten des Hauptereignisses beschreibt und ein zweiter Zustandsautomat (nicht gezeigt), der die Ereignisse nach dem Auftreten des Hauptereignisses in die Zukunft hinein beschreibt.

Sobald ein Hauptereignis auftritt, kann der Zustandsautomat A invertiert oder umgekehrt werden. Die Umkehrung des Zustandsautomaten A ist die deterministische Variante Ä des Automaten A, mit den Pfeilen in umgekehrter Reihenfolge. Dieser umgekehrte Zustandsautomat Ä akzeptiert dieselben Sequenzen wie A, aber in der umgekehrten Reihenfolge. Durch den umgekehrten Zustandsautomaten Ä kann von dem Auftreten des Hauptereignisses an Schritt für Schritt in die Vergangenheit gegangen werden, um zu überprüfen, ob eine bestimmte Sequenz an Ereignissen auftritt, die einem Muster entsprechen, das den ersten Teil eines Angriffs, d.h. den Teil in der Vergangenheit, darstellt. Der zweite Teil, d.h. der Teil des Angriffs in der Zukunft, wird mittels des unveränderten zweiten Automaten überprüft.

In Fig. 2 ist ein mögliches Beispiel für den ersten Automaten A gezeigt Hierbei stellen Z1 und Z2 zwei Zustände dar. Ausgehend von diesen Zuständen können verschiedene Ereignisse a, b auftreten, die als Zustandsübergänge dargestellt sind. In dem ersten Automaten A ist der akzeptierende Zustand Z1 und der Anfangszustand ist Z2. Der Automat A erkennt alle Sequenzen, die mit dem Ereignis "a" enden.

Der Automat A' erkennt die Umkehrsprache, d.h. der akzeptierende Zustand und der Anfangszustand sind vertauscht, und die Pfeile, d.h. die Zustandsübergänge, haben eine umgekehrte Reihenfolge. Dieser Automat A' erkennt alle Sequenzen, die mit "a" anfangen. Der Automat A' ist allerdings nichtdeterministisch, und damit für die Mustererkennung untauglich.

Der Automat A̅ ist die deterministische Version des Automaten A', der die Umkehrsprache erkennt. Der Automat A̅ erkennt alle Sequenzen, die mit "a" anfangen. Wie ein Automat umgekehrt wird und wie eine nicht-deterministische Variante eines Automaten konstruiert werden kann, sind beispielsweise aus Hopcroft, Motwani, Ullman: Introduction to Automata Theory, Languages, and Computation, Nov. 2000, bekannt.

Fig. 3 zeigt ein Verfahren zum Erkennen von Angriffen auf ein technisches System 20 anhand von Ereignissen einer Ereignisfolge 4.

In einem ersten Schritt 101 wird die Ereignisfolge 4, die eine Mehrzahl von Ereignissen aufweist, empfangen. Ein Angriff ist dabei durch eine bestimmte Sequenz an Ereignissen in der empfangenen Ereignisfolge 4 bestimmt.

In einem zweiten Schritt 102 überprüft die Überprüfungseinheit 2 die empfangene Ereignisfolge 4 basierend auf einem Hauptereignis, das in der bestimmten Sequenz an Ereignissen enthalten ist. Wenn das Hauptereignis aufgetreten ist, wird eine Mustererkennung in der empfangenen Ereignisfolge 4 basierend auf der bestimmten Sequenz an Ereignissen durchgeführt.

Obwohl die vorliegende Erfindung anhand von Ausführungsbeispielen beschrieben wurde, ist sie vielfältig modifizierbar.

## Patentansprüche

1. Rechenvorrichtung (10) zum Erkennen von Angriffen auf ein technisches System (20) anhand von Ereignissen einer Ereignisfolge (4), mit:
einer Empfangseinheit (1) zum Empfangen der Ereignisfolge (4), die eine Mehrzahl von Ereignissen aufweist, wobei ein Angriff durch eine bestimmte Sequenz an Ereignissen in der empfangenen Ereignisfolge (4) bestimmt ist,
einer Überprüfungseinheit (2) zum Überprüfen der empfangenen Ereignisfolge (4) basierend auf einem Hauptereignis, das in der bestimmten Sequenz an Ereignissen enthalten ist, wobei die Überprüfungseinheit (2) dazu eingerichtet ist, eine Mustererkennung in der empfangenen Ereignisfolge (4) basierend auf der bestimmten Sequenz an Ereignissen durchzuführen, wenn das Hauptereignis aufgetreten ist, und
einer Speichereinheit (3) zum Speichern der empfangenen Ereignisfolge (4) in einer Logdatei,
wobei die Überprüfungseinheit (2) dazu eingerichtet ist, eine rückwärtslaufende Mustererkennung in der gespeicherten Ereignisfolge (4) durchzuführen, wobei die Überprüfungseinheit (2) die Mustererkennung zu dem Zeitpunkt des Auftretens des Hauptereignisses beginnt.

2. Rechenvorrichtung (10) nach Anspruch 1,
**dadurch gekennzeichnet, dass** das Hauptereignis ein bestimmtes Ereignis aus der Sequenz von Ereignissen ist, bei dem die Wahrscheinlichkeit eines Angriffs maximal ist.

3. Rechenvorrichtung (10) nach einem der Ansprüche 1 bis 2,
**dadurch gekennzeichnet, dass** die Überprüfungseinheit (2) einen Zustandsautomaten (A) zur Überprüfung der Ereignisfolge (4) aufweist.

4. Rechenvorrichtung (10) nach einem der Ansprüche 1 bis 3,
**dadurch gekennzeichnet, dass** die Überprüfungseinheit (4) einen ersten Zustandsautomaten (Ä) und einen zweiten Zustandsautomaten (A) aufweist, wobei der erste Zustandsautomat (Ä) die Ereignisse bis zu dem Zeitpunkt des Auftretens des Hauptereignisses abbildet und der zweite Zustandsautomat (A) die Ereignisse nach dem Zeitpunkt des Auftretens des Hauptereignisses abbildet.

5. Rechenvorrichtung (10) nach Anspruch 4,
**dadurch gekennzeichnet, dass** der erste Zustandsautomat (Ä) dazu geeignet ist, die Ereignisfolge (4) rückwärts zu überprüfen.

6. Rechenvorrichtung (10) nach einem der Ansprüche 1 bis 5,
**dadurch gekennzeichnet, dass** die Überprüfungseinheit (4) dazu eingerichtet ist, ein Alarmsignal basierend auf einem Ergebnis der Mustererkennung auszugeben.

7. Rechenvorrichtung (10) nach einem der Ansprüche 1 bis 6,
**dadurch gekennzeichnet, dass** die Ereignisfolge (4) Ausgaben von Sensoren des technischen Systems (20) aufweist.

8. Rechenvorrichtung (10) nach Anspruch 7,
**dadurch gekennzeichnet, dass** die Rechenvorrichtung (10) Teil eines Angriffserkennungssystems zum Erkennen von Angriffen auf das technische System (20) ist.

9. Verfahren zum Erkennen von Angriffen auf ein technisches System (20) anhand von Ereignissen einer Ereignisfolge (4), mit:
Empfangen (101) der Ereignisfolge (4), die eine Mehrzahl von Ereignissen aufweist, wobei ein Angriff durch eine bestimmte Sequenz an Ereignissen in der empfangenen Ereignisfolge (4) bestimmt ist,
Speichern der empfangenen Ereignisfolge (4) in einer Logdatei, und
Überprüfen (102) der empfangenen Ereignisfolge (4) basierend auf einem Hauptereignis, das in der bestimmten Sequenz an Ereignissen enthalten ist, wobei eine Mustererkennung in der empfangenen Ereignisfolge (4) basierend auf der bestimmten Sequenz an Ereignissen durchgeführt wird, wenn das Hauptereignis aufgetreten ist, wobei eine rückwärtslaufende Mustererkennung in der gespeicherten Ereignisfolge (4) durchgeführt wird, wobei die Mustererkennung zu dem Zeitpunkt des Auftretens des Hauptereignisses beginnt.

10. Computerprogrammprodukt, welches auf einer programmgesteuerten Einrichtung die Durchführung des Verfahrens nach Anspruch 9 veranlasst.

## Claims

1. Computation apparatus (10) for identifying attacks on a technical system (20) on the basis of events of an event sequence (4), having:
a reception unit (1) for receiving the event sequence (4), which has a plurality of events, wherein an attack is determined by a particular sequence of events in the received event sequence (4),
a checking unit (2) for checking the received event sequence (4) based on a main event that the particular sequence of events contains, wherein the checking unit (2) is set up to perform a pattern recognition in the received event sequence (4) based on the particular sequence of events when the main event has occurred, and
a memory unit (3) for storing the received event sequence (4) in a log file,
wherein the checking unit (2) is set up to perform a backward pattern recognition in the stored event sequence (4), wherein the checking unit (2) begins the pattern recognition at the time of the occurrence of the main event.

2. Computation apparatus (10) according to Claim 1,
**characterized in that** the main event is a particular event from the sequence of events for which the probability of an attack is at a maximum.

3. Computation apparatus (10) according to one of Claims 1 to 2,
**characterized in that** the checking unit (2) has a state machine (A) for checking the event sequence (4).

4. Computation apparatus (10) according to one of Claims 1 to 3,
**characterized in that** the checking unit (4) has a first state machine (A̅) and a second state machine (A), wherein the first state machine (A̅) maps the events up until the time of the occurrence of the main event and the second state machine (A) maps the events after the time of the occurrence of the main event.

5. Computation apparatus (10) according to Claim 4,
**characterized in that** the first state machine (A̅) is suited to checking the event sequence (4) backward.

6. Computation apparatus (10) according to one of Claims 1 to 5,
**characterized in that** the checking unit (4) is set up to output an alarm signal based on a result of the pattern recognition.

7. Computation apparatus (10) according to one of Claims 1 to 6,
**characterized in that** the event sequence (4) has outputs from sensors of the technical system (20).

8. Computation apparatus (10) according to Claim 7,
**characterized in that** the computation apparatus (10) is part of an attack identification system for identifying attacks on the technical system (20).

9. Method for identifying attacks on a technical system (20) on the basis of events of an event sequence (4), involving:
reception (101) of the event sequence (4), which has a plurality of events, wherein an attack is determined by a particular sequence of events in the received event sequence (4),
storing the received event sequence (4) in a log file, and
checking (102) of the received event sequence (4) based on a main event that the particular sequence of events contains, wherein a pattern recognition is performed in the received event sequence (4) based on the particular sequence of events when the main event has occurred, wherein a backward pattern recognition is performed in the stored event sequence (4), wherein the pattern recognition begins at the time of the occurrence of the main event.

10. Computer program product that prompts performance of the method according to Claim 9 on a program-controlled device.

## Revendications

1. Dispositif informatique (10) de détection des attaques sur un système technique (20) à l'aide des événements d'une séquence d'événements (4), comprenant :
une unité de réception (1) pour recevoir la séquence d'événements (4) qui présente une pluralité d'événements, dans lequel une attaque est déterminée par une séquence déterminée d'événements dans la séquence d'événements (4) reçue,
une unité de vérification (2) pour vérifier la séquence d'événements (4) reçue en se basant sur un événement principal qui est contenu dans la séquence déterminée d'événements, dans lequel l'unité de vérification (2) est conçue pour exécuter une détection de modèle dans la séquence d'événements (4) reçue en se basant sur la séquence déterminée d'événements, lorsque l'événement principal s'est produit, et
une unité de mémoire (3) pour enregistrer la séquence d'événements (4) reçue dans un fichier de logs,
dans lequel l'unité de vérification (2) est conçue pour exécuter une détection de modèle en arrière dans la séquence d'événements (4) enregistrée, dans lequel l'unité de vérification (2) commence la détection de modèle au moment de la survenue de l'événement principal.

2. Dispositif informatique (10) selon la revendication 1, **caractérisé en ce que** l'événement principal est un événement déterminé issu de la séquence d'événements dans lequel la probabilité d'une attaque est maximale.

3. Dispositif informatique (10) selon l'une des revendications 1 à 2, **caractérisé en ce que** l'unité de vérification (2) présente un automate fini (A) pour vérifier la séquence d'événements (4).

4. Dispositif informatique (10) selon l'une des revendications 1 à 3, **caractérisé en ce que** l'unité de vérification (4) présente un premier automate fini (À) et un deuxième automate fini (A), dans lequel le premier automate fini (À) reproduit les événements jusqu'au moment de la survenue de l'événement principal et le deuxième automate fini (A) reproduit les événements après le moment de la survenue de l'événement principal.

5. Dispositif informatique (10) selon la revendication 4, **caractérisé en ce que** le premier automate fini (À) est approprié pour vérifier la séquence d'événements (4) en arrière.

6. Dispositif informatique (10) selon l'une des revendications 1 à 5, **caractérisé en ce que** l'unité de vérification (4) est conçue pour émettre un signal d'alarme en se basant sur un résultat de la détection de modèle.

7. Dispositif informatique (10) selon l'une des revendications 1 à 6, **caractérisé en ce que** la séquence d'événements (4) présente des sorties de capteur du système technique (20).

8. Dispositif informatique (10) selon la revendication 7, **caractérisé en ce que** le dispositif informatique (10) fait partie d'un système de détection d'attaque pour détecter des attaques sur le système technique (20).

9. Procédé de détection des attaques sur un système technique (20) à l'aide des événements d'une séquence d'événements (4), comprenant :
la réception (101) de la séquence d'événements (4) qui présente une pluralité d'événements, dans lequel une attaque est déterminée par une séquence déterminée d'événements dans la séquence d'événements (4) reçue,
l'enregistrement de la séquence d'événements (4) reçue dans un fichier de logs, et
la vérification (102) de la séquence d'événements (4) reçue en se basant sur un événement principal qui est contenu dans la séquence déterminée d'événements, dans lequel une détection de modèle dans la séquence d'événements (4) reçue est effectuée en se basant sur la séquence déterminée d'événements, lorsque l'événement principal est survenu, dans lequel une détection de modèle en arrière est effectuée dans la séquence d'événements (4) enregistrée, dans lequel la détection de modèle commence au moment de la survenue de l'événement principal.

10. Produit de programme informatique qui déclenche l'exécution du procédé selon la revendication 9 sur un dispositif commandé par un programme.
